# FASCICULE DE BREVET EUROPEEN

(11) **EP 2 004 452 B1**
(45) Date de publication et mention de la délivrance du brevet: **26.05.2010**
(21) Numéro de dépôt: 01982560.3
(22) Date de dépôt: 26.10.2001
(51) Int. Cl.: B60Q 1/52

(54) **VEHICULE EQUIPE D'UN DISPOSITIF DE SIGNALISATION VISUELLE**
FAHRZEUG MIT EINER VISUELLEN SIGNALEINRICHTUNG
VEHICLE EQUIPPED WITH A VISUAL SIGNALLING DEVICE

(30) Priorité: 09.11.2000 FR 0014914
(43) Date de publication de la demande: 24.12.2008
(73) Titulaire: Astron Group Technologies S.A., 1449 Luxembourg (LU)
(72) Inventeur: Bleiner, Thomas, F-06360 Eze (FR)
(74) Mandataire: Pajola, Stefano
(86) Numéro de dépôt international: PCT/FR2001/003324
(87) Numéro de publication internationale: WO 2002/038416

(56) Documents cités:
- DE-U- 29 801 587
- US-A- 5 495 243
- US-A- 5 580 140
- US-A- 5 617 085
- US-A- 5 923 243
- "LASER APPLICATION IN FOGGY DRIVING CONDITIONS" RESEARCH DISCLOSURE, KENNETH MASON PUBLICATIONS, HAMPSHIRE, GB, no. 404, 1 décembre 1997 (1997-12-01), page 918 XP000735756 ISSN: 0374-4353

## Description

La présente invention concerne un dispositif de signalisation visuelle adaptable à un véhicule en circulation.

Il trouvera son application particulièrement dans le domaine de l'équipement de véhicules automobiles à des fins de sécurité et de signalisation.

Il est applicable à tous véhicules en mouvement tels des bus, ou encore des bateaux.

Les véhicules automobiles actuels comportent de plus en plus d'équipement pour en améliorer la sécurité.

Par temps de brouillard, en particulier, on a déjà pensé à offrir au véhicule suiveur d'un véhicule équipé une information sur la distance le séparant du véhicule précédent. Dans ce cadre, on connaît du document WO-A-9520502, qui est considéré comme étant l'état de la technique le plus proche, un dispositif permettant à un véhicule circulant au milieu d'autres véhicules de transmettre un signal à des véhicules qui le suivent immédiatement. Ce dispositif utilise un faisceau laser visible émis à partir du dispositif et dirigé dans le sens opposé au déplacement du véhicule équipé.

Le faisceau laser est dirigé en permanence de telle façon que la distance entre le véhicule équipé et le point d'impact dudit faisceau sur la chaussée corresponde à peu près à la distance de sécurité que le véhicule suivant immédiatement doit respecter. Ce dispositif est particulièrement utilisable par temps de pluie intense ou par brouillard.

Ce dispositif offre une information de distance avantageuse pour le véhicule suiveur. Il ne donne cependant pas entière satisfaction.

En particulier, un tel dispositif ne fournit aucune information explicite au véhicule suiveur notamment en cas d'accident, en cas d'arrêt d'urgence ou tout simplement pour le prévenir de l'utilisation à faire du point lumineux qu'il peut voir sur la chaussée.

Qui plus est, ce dispositif n'a d'intérêt que pour le véhicule suiveur et le véhicule qui en est équipé ne bénéficie d'aucune information.

Par conséquent, ce dispositif est une application limitée et ne fournie qu'une information très restreinte à un véhicule suiveur.

On a également pensé à fournir des informations à un véhicule notamment quant à l'état d'encombrement de la route ou à d'éventuels accidents par le biais du tableau de bord du véhicule équipé. Son conducteur peut ainsi avoir accès à diverses informations routières ou à des données de type GPS. Cependant, de tels systèmes nécessitent un aménagement important du véhicule qui ne peut se prévoir qu'au moment de la construction du véhicule. Il est donc difficile d'équiper des véhicules déjà sur le marché.

Par ailleurs, de tels systèmes engendrent la nécessité d'écrans de visualisation au niveau du tableau de bord et de matériels électroniques embarqués relativement lourd ce qui augmente le coût de telles techniques.

La présente invention permet de remédier aux inconvénients des techniques actuellement connues.

Elle présente pour ce faire un nouveau dispositif de signalisation visuelle adaptable à un véhicule notamment automobile, en circulation sur une chaussée.

Ce dispositif a l'avantage d'offrir au véhicule suiveur une information visuelle notamment par temps de pluie ou de brouillard. A cet effet, le dispositif émet un dessin qui peut être fixe ou encore de nature variable suivant le type d'information à communiquer au véhicule suiveur.

Par conséquent, le présent dispositif offre une large gamme d'application en matière information routière et permet de prévenir un véhicule suiveur par exemple d'un accident, d'une nappe de brouillard à venir ou encore d'un dysfonctionnement technique au sein du véhicule qui le précède.

Un autre avantage du dispositif selon l'invention, c'est qu'il permet suivant une variante préférée de projeter vers l'avant du véhicule équipé un dessin d'information. Ce dessin pourra être identique à celui projeté à l'arrière ou être différent notamment pour fournir une information routière au conducteur du véhicule équipé.

Le dispositif selon l'invention a également pour but de fournir une information visuelle déterminée par une commande extérieure (par exemple fournie par un organisme de transmission d'information routière) ou par détection de modification d'état de la route ou du véhicule (par exemple par détection d'un temps de pluie, du déclenchement de l'alarme du véhicule ou d'un air-bag).

Un autre but de l'invention est selon une variante préférée d'assister le conducteur du véhicule équipé dans sa conduite par temps de brouillard, de pluie ou d'une façon générale par mauvaise visibilité.

Pour ce faire, le dispositif a l'avantage de mettre en évidence les bandes de marquage au sol en avant du véhicule en y projetant le faisceau laser qui pourra balayer toute la bande.

D'autres buts et avantages apparaîtront au cours de la description qui suit qui donne le mode préféré de l'invention mais qui n'en est pour autant pas limitative.

La présente invention concerne un dispositif de signalisation visuelle adaptable à un véhicule en circulation, comprenant un émetteur arrière pour l'émission d'un faisceau laser vers l'arrière du véhicule, caractérisé par le fait que l'émetteur arrière comporte des moyens de génération de dessins pour la projection, par le faisceau laser, d'un dessin de signalisation à l'arrière du véhicule.

Ce dispositif pourra se présenter selon les variantes introduites ci-après :
- il comprend des moyens de commande de l'activation de l'émetteur arrière pour sa mise en marche conditionnelle.
- il comprend un émetteur avant pour l'émission d'un faisceau laser vers l'avant du véhicule, ledit émetteur avant comportant des moyens de génération de dessins pour la projection, par le faisceau laser, d'un dessin de signalisation à l'avant du véhicule.
- il comprend des moyens de commande de l'activation de l'émetteur avant pour sa mise en marche conditionnelle.
- les moyens de commande sont reliés à un ou plusieurs capteurs, pour une activation lors d'une détection d'un changement d'état du véhicule ou des conditions météorologiques.
- les moyens de commande sont reliés à un récepteur d'un signal de commande extérieur, pour une activation lors de la réception du signal de commande extérieur.
- les moyens de génération de dessins sont aptes à former un dessin parmi plusieurs choix et les moyens de commande sont aptes à adresser différentes commandes à l'émetteur selon la nature du dessin à projeter.
- il équipe un véhicule en circulation sur une chaussée, et il comporte au moins une caméra visant une zone de la partie avant du véhicule dans laquelle se trouvent les bandes de marquage au sol soit centrales, soit latérales en position normale de circulation du véhicule, des moyens de traitement vidéo pour le calcul de la position des bandes de marquages au sol relativement au véhicule et des moyens de rotation de l'émetteur avant à motorisation commandée pour positionner le point d'impact du faisceau laser vers les bandes de marquage au sol.
- les moyens de rotation sont actionnés, pour que le point d'impact du faisceau balaye la surface de la bande de marquage au sol ciblée.

L'invention sera mieux comprise au vu des planches de dessins situés en annexe et qui comprennent :
- La figure 1 montrant un premier mode de réalisation de l'invention avec une projection de dessins vers l'arrière du véhicule.
- La figure 2 qui illustre une projection de dessins par faisceau laser à l'avant du véhicule.
- La figure 3 qui montre un mode de réalisation préféré de l'invention dans lequel les dessins projetés par faisceau laser sont commandés par un signal de commande extérieur.
- La figure 4 qui montre une autre variante de réalisation de l'invention pour laquelle un faisceau laser est projeté à l'avant du véhicule et impacté au niveau des bandes de marquage au sol pour guider la conduite de l'utilisateur.

Comme décrit dans le document WO-A-9520502, il est possible d'équiper un véhicule automobile d'un émetteur laser pour la projection d'un faisceau laser à l'arrière du véhicule.

Suivant cette antériorité, le faisceau laser est de faible dimension pour fournir un point d'impact sur la chaussée à une distance prédéterminée du véhicule émetteur. Cet appareil ne fournit cependant qu'une information d'impact sur la chaussée.

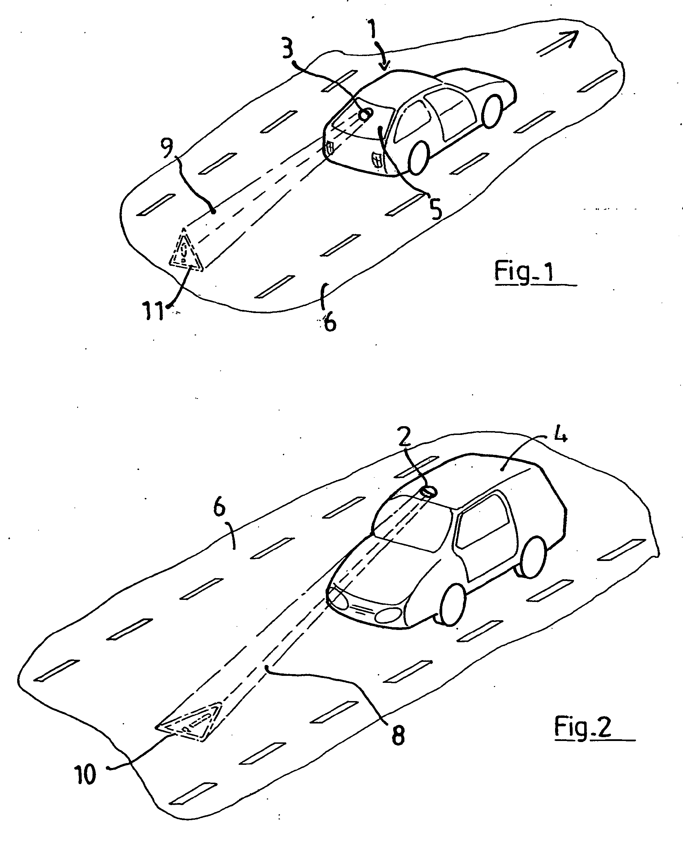

Dans le cadre de l'invention et tel qu'illustré à la figure 1, le dispositif de signalisation comprend un émetteur arrière de conception courante apte à émettre un faisceau laser à l'arrière du véhicule.

Contrairement à l'état de la technique actuel tel que présenté dans le document WO-A-9520502, le faisceau émis permet la formation d'un dessin correspondant à une signalisation visuelle déterminée à l'arrière du véhicule et dans l'espace.

Pour ce faire, l'émetteur arrière 3 qui équipe le véhicule 1 comporte des moyens de génération de dessins.

De façon préférée, ces moyens de génération de dessins sont intégrés à l'émetteur suivant des techniques connues pour la projection de dessins à l'aide d'émetteur laser. De tels appareils sont actuellement utilisés dans le domaine des effets lumineux pour spectacles.

Pour des raisons de sécurité, on utilisera préférentiellement un émetteur laser de faible puissance et par exemple de classe 2.

De façon préférée, le dessin généré est émis à l'arrière du véhicule 1 et n'est pas projeté en permanence. A cet effet, le dispositif comprendra avantageusement des moyens de commande de l'activation de l'émetteur arrière 3 pour sa mise en marche conditionnelle.

De façon préférée, le dispositif comprend de façon similaire mais pour l'avant du véhicule 1, un émetteur avant 2 pour l'émission d'un faisceau laser 8 vers l'avant du véhicule 1.

De même, l'émetteur avant 2 comprend des moyens de génération de dessins pour produire un dessin 10 en avant du véhicule.

Toujours de façon similaire à l'émetteur arrière 3, l'émetteur avant 2 est couplé à des moyens de commande qui en permettent l'activation de façon conditionnelle.

A titre d'exemple préféré, cette mise en marche conditionnelle est réalisée par détection d'un changement d'état du véhicule (par exemple par déclenchement de l'alarme, rotation de la clé de contact, déclenchement d'un air-bag). La mise en marche peut également être conditionnée de façon complémentaire ou indépendante par les modifications de conditions météorologiques. A cet effet, des capteurs seront positionnés sur le véhicule pour détecter une forte pluie ou encore un temps de brouillard.

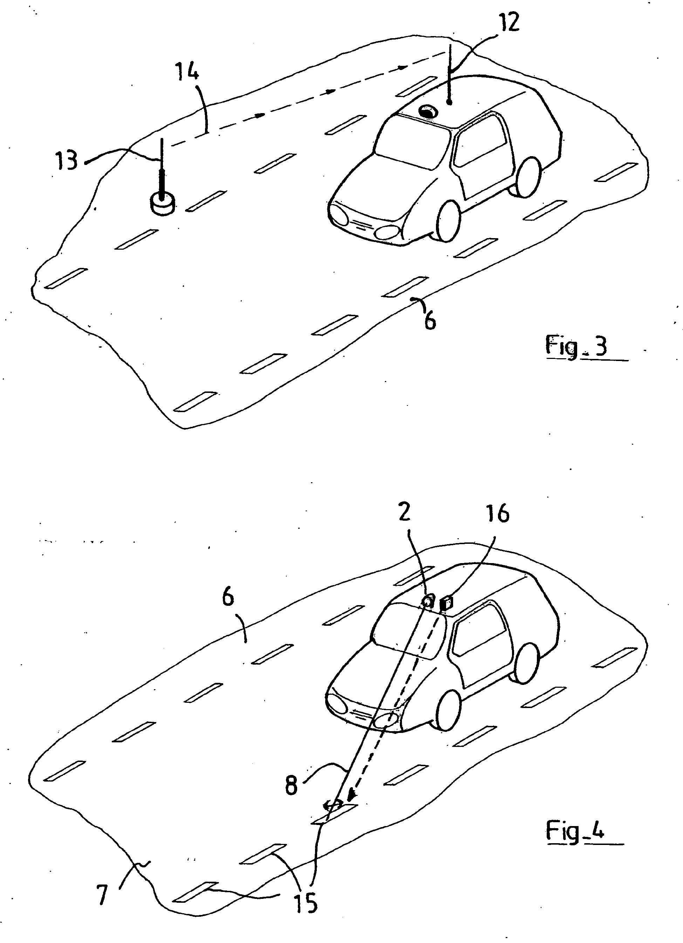

Il est encore possible de commander l'activation de l'émetteur avant 2 et de l'émetteur arrière 3 par le biais d'un signal de commande extérieur 14 tel que représenté en figure 3. A ce niveau, le véhicule 1 est équipé de moyens de réception d'un signal de commande 14. Ces moyens incluent notamment une antenne 12 et un récepteur embarqués sur le véhicule.

De façon préférée, le signal de commande 14 est un signal hertzien notamment par transmission par satellites émis par un centre de services d'informations routières et transmis au véhicule 1 par des bornes 13 de transmission positionnées sur le bord de la route.

On constate qu'il est possible d'activer l'émission d'un faisceau laser 9 à l'arrière du véhicule 1, et éventuellement un faisceau laser 8 à l'avant du véhicule 1 par le biais de multiples conditions d'activation.

Il est également possible de faire varier l'identité du dessin 11, 10 à projeter suivant la nature de la commande.

A titre d'exemple, un capteur détectant une forte pluie pourra générer un dessin à l'arrière du véhicule constitué par un panneau avertisseur de danger tel que représenté aux figures 1 et 2.

Toujours à titre d'exemple, le déclenchement d'un capteur relié à l'alarme du véhicule 1 pourra générer un dessin à l'arrière et éventuellement à l'avant du véhicule 1, constitutif d'une information signalant que le véhicule est volé.

Toujours à titre d'exemple, le déclenchement des coussins gonflables (air-bags) pourra révéler que le véhicule a subi un accident et un dessin 10, 11 correspondant à des informations sur le conducteur et les passagers pourra être fourni (identité des personnes, groupe sanguin,...).

En se référant à la figure 4, on voit que le dispositif selon l'invention peut être équipé d'une caméra 16 couplée avec des moyens de traitement vidéo non représentés.

Telle que figurée, la caméra 16 est orientée à l'avant du véhicule 1 pour cibler une zone de la chaussée 6 correspondant à la zone où se trouve habituellement les bandes de marquage au sol 15 en position normale de circulation.

Il pourra s'agir des bandes de marquage au sol centrales ou latérales.

Par le biais de la caméra 16 et des moyens de traitement vidéo, on calcule au sein du véhicule 1 la position des bandes de marquage 15 au sol relativement au véhicule 1.

De façon conséquente, on oriente le faisceau laser 8 afin qu'il impacte la chaussée 6 au niveau des bandes de marquage au sol 15. L'orientation sélective de l'émetteur 2 pourra être opérée par le biais de moyens de rotation à motorisation commandée. Il pourra s'agir d'un moteur électrique pouvant commander la rotation de l'émetteur suivant un axe vertical, et éventuellement suivant un axe horizontal si l'on souhaite modifier la distance d'impact du faisceau laser avant 8 par rapport au véhicule 1.

Avantageusement, la motorisation est commandée pour que le faisceau 8 (qui est alors de faible largeur) balaye la surface de la bande de marquage ciblée, et ce, latéralement et, possiblement, longitudinalement.

Un émetteur 2 à laser de couleur blanche sera préféré dans cette application.

Il est à noter, que par association du véhicule ainsi équipé du présent dispositif à un ensemble de bornes de transmission 13 reliées par voie radio à une centrale de transmission d'informations routières, on forme un système unitaire de transmission d'informations à un très grand nombre de véhicules.

On notera également que le dispositif selon l'invention peut équiper un véhicule déjà sur le marché sans qu'il soit nécessaire qu'il soit prévu de l'incorporer au moment de la construction de l'automobile.

Pour des raisons de simplicité, les figures font référence à un émetteur 2 et une caméra sur le toit 4 du véhicule.

Dans la pratique, l'émetteur 2 se situera plutôt plus bans, par exemple, au niveau de la grille du radiateur.

De même, la ou les caméras s'intégreront dans les blocs d'optiques de phares (d'un côté du véhicule ou sur les deux côtés, selon le mode de réalisation souhaité).

### REFERENCES

1. Véhicule
2. Emetteur avant
3. Emetteur arrière
4. Toit
5. Lunette arrière
6. Chaussée
7. Voie de circulation
8. Faisceau laser avant
9. Faisceau laser arrière
10. Dessin avant
11. Dessin arrière
12. Antenne
13. Borne de transmission
14. Signal de commande
15. Marquage au sol
16. Caméra

## Revendications

1. Véhicule (1) équipé d'un dispositif de signalisation visuelle dans des conditions de mauvaise visibilité, ledit dispositif comprenant un émetteur arrière (3) pour l'émission d'un faisceau laser (9) vers l'arrière du véhicule (1), **caractérisé par le fait que**
l'émetteur arrière (3) comporte des moyens de génération de dessins pour la projection, par le faisceau laser, de dessins (11) de signalisation à l'arrière du véhicule.

2. Véhicule selon la revendication 1, **caractérisé par le fait que** le dispositif de signalisation visuelle comprend des moyens de commande de l'activation de l'émetteur arrière (3) pour sa mise en marche conditionnelle.

3. Véhicule selon la revendication 1 ou 2, **caractérisé par le fait que** le dispositif de signalisation visuelle comprend un émetteur avant (2) pour l'émission d'un faisceau laser vers l'avant (8) du véhicule (i), ledit émetteur avant (2) comportant des moyens de génération de dessins pour la projection, par le faisceau laser, de dessins de signalisation à l'avant du véhicule.

4. Véhicule selon la revendication 3, **caractérisé par le fait que** le dispositif de signalisation visuelle comprend des moyens de commande de l'activation de l'émetteur avant (2) pour sa mise en marche conditionnelle.

5. Véhicule selon la revendication 2 ou 4, **caractérisé par le fait que** les moyens de commande sont reliés à un ou plusieurs capteurs, pour une activation lors dune détection d'un changement d'état du véhicule ou des conditions météorologiques.

6. Véhicule selon la revendication 2, 4 ou 5, **caractérisé par le fait que** les moyens de commande sont reliés à un récepteur d'un signal de commande (14) extérieur, pour une activation lors de la réception du signal de commande extérieur.

7. Véhicule selon la revendication 2, 4, 5 ou 6, **caractérisé par le fait que** les moyens de génération de dessins sont aptes à former un dessin parmi plusieurs choix et que les moyens de commande sont aptes à adresser différentes commandes à l'émetteur selon la nature du dessin à projeter.

8. Véhicule selon la revendication 3, **caractérisé par le fait que**:
- Le dispositif de signalisation visuelle équipe un véhicule en circulation sur une chaussée et comporte:
- au moins une caméra (16) visant une zone de la partie avant du véhicule (1) dans laquelle se trouvent les bandes de marquage au sol (15) soit centrales, soit latérales en position normale de circulation du véhicule,
- des moyens de traitement vidéo pour le calcul de la position des bandes de marquage (15) au sol relativement au véhicule (1),
- des moyens de rotation de l'émetteur avant (2) à motorisation commandée
pour positionner le point d'impact du faisceau laser vers les bandes de marquage au sol (15).

9. Véhicule selon la revendication 8, **caractérisé par le fait que** les moyens de rotation sont actionnés, pour que le point d'impact du faisceau balaye la surface de la bande de marquage au sol (15) ciblée.

## Claims

1. Vehicle (1) provided with a device for visual signalling under conditions of poor visibility, said device comprising a rear emitter (3) for emitting a laser beam (9) rearwardly of the vehicle (1), **characterized in that** the rear emitter (3) comprises means for generating imagines for projection, by laser beam, of signalling imagines (11) to the rear of the vehicle.

2. Vehicle according claim 1, **characterized in that** the visual signalling device comprises control means of the actuation of the rear emitter (3) for its conditional operation.

3. Vehicle according claim 1 or 2, **characterized in that** the visual signalling device comprises a front emitter (2) for emitting a laser beam (8) forwardly to the vehicle (1), said front emitter (2) comprising means for generating imagines for projections, by the laser beam, of signalling imagines to the front of the vehicle.

4. Vehicle according claim 3, **characterized in that** the visual signalling device comprises means for controlling the actuation of the front emitter (2) for its conditional operation.

5. Vehicle according claim 2 or 4, **characterized in that** the control means are connected to one or more detectors, for actuation upon detection of a change of the condition of the vehicle or of the weather conditions.

6. Vehicle according claim 2, 4 or 5, **characterized in that** the control means are connected to a receiver of an external control signal (14), for an actuation upon the receiving of an external control signal.

7. Vehicle according claim 2, 4, 5 or 6, **characterized in that** the means for generating the imagines are designed to form an imagine from among several choices and **in that** the control means are designed to address different controls to the emitter according to the nature of the imagine to be projected.

8. Vehicle according claim 3, **characterized in that:**
- the visual signalling device is mounted on a vehicle circulating on a roadway and comprises:
- at least one camera (16) observing a region to the front of the vehicle (1) wherein are located marking strips (15) on the ground either centrally or laterally in the normal position of driving of the vehicle
- video processing means for computing the position of the marking strips (15) on the ground relative to the vehicle (1),
- means with controlled motorization for the rotation of the front emitter (2) for positioning the impact point of the laser beam toward the marking strips (15) on the ground.

9. Vehicle according claim 8, **characterized in that** the rotation means are actuated such that the impact point of the beam sweeps the surface of the targeted marking strip (15) on the ground.

## Patentansprüche

1. Fahrzeug (1) das mit einer sichtbaren Anzeigevorrichtung für schlechte Sichtverhältnisse versehen ist, wobei die Vorrichtung einen hinteren Strahler (3) zur Abgabe eines Laserstrahls (9) nach hinten vom Fahrzeug (1) aufweist, **dadurch gekennzeichnet, dass** der hintere Strahler (3) Mittel zur Erzeugung von Mustern zur Projektion mittels des Laserstrahls, von Signalmustern (11) nach hinten vom Fahrzeug aufweist.

2. Fahrzeug gemäß Anspruch 1, **dadurch gekennzeichnet, dass** die sichtbare Anzeigevorrichtung Mittel zur Steuerung der Betätigung des hinteren Strahlers (3) umfasst, um ihn unter Umständen in Gang zu setzen.

3. Fahrzeug gemäß dem Anspruch 1 oder 2, **dadurch gekennzeichnet, dass** die sichtbare Anzeigevorrichtung einen vorderen Strahler (2) umfasst zur Abgabe eines Laserstrahls (9) nach vorn (8) vom Fahrzeug, wobei der vordere Strahler (2) Mittel zur Erzeugung von Mustern zur Projektion mittels des Laserstrahls, von Signalmustern nach vorn vom Fahrzeug aufweist.

4. Fahrzeug gemäß Anspruch 3, **dadurch gekennzeichnet, dass** die sichtbare Anzeigevorrichtung Mittel zur Steuerung der Betätigung des vorderen Strahlers (2) umfasst, um ihn unter Umständen in Gang zu setzen.

5. Fahrzeug gemäß dem Anspruch 2 oder 4, **dadurch gekennzeichnet, dass** die Mittel zur Steuerung verbunden sind mit einem oder mehreren Sensoren für eine Betätigung beim Ermitteln einer Zustandsänderung des Fahrzeugs oder der Wetterbedingungen.

6. Fahrzeug gemäß dem Anspruch 2, 4 oder 5, **dadurch gekennzeichnet, dass** die Mittel zur Steuerung verbunden sind mit einem Empfänger für ein äußeres Steuersignal (14) für eine Betätigung beim Empfang des äußeres Steuersignals.

7. Fahrzeug gemäß dem Anspruch 2, 4, 5 oder 6, **dadurch gekennzeichnet, dass** die Mittel zur Erzeugung der Muster geeignet sind ein Muster zu bilden aus mehreren Möglichkeiten und dass die Steuerungsmittel geeignet sind unterschiedliche Befehle an den Strahler in Abhängigkeit von der Art des zu projizierenden Musters.

8. Fahrzeug gemäß Anspruch 3, **dadurch gekennzeichnet, dass**
- die sichtbare Anzeigevorrichtung ein Fahrzeug im Verkehr auf einer Straße ausstattet und aufweist:
- mindestens eine Kamera (16), die auf einen Bereich im vorderen Teil des Fahrzeugs (1) gerichtet ist, in dem sich die Markierungsstreifen am Boden (15) zentral, seitlich bei normaler Verkehrsposition des Fahrzeugs,
- Mittel zur Videobearbeitung zum Errechnen der Position der Markierungsstreifen am Boden (15) relativ zum Fahrzeug (1),
- Mittel zur Drehung des vorderen Strahlers (2) mit einem gesteuerten Motor um den Auftreffpunkt des Laserstrahls einzustellen auf die Markierungsstreifen am Boden (15).

9. Fahrzeug gemäß Anspruch 8, **dadurch gekennzeichnet, dass** die Mittel zur Drehung so betätigt werden, dass der Auftreffpunkt des Strahls die Fläche der anvisierten Markierungsstreifen am Boden (15) überstreicht.
